# EUROPÄISCHE PATENTSCHRIFT

(11) **EP 0 762 334 B1**
(45) Veröffentlichungstag und Bekanntmachung des Hinweises auf die Patenterteilung: **24.01.2001**
(21) Anmeldenummer: 95114057.3
(22) Anmeldetag: 07.09.1995
(51) Int. Cl.: G06K 15/02, G07B 17/02

(54) **Verfahren zum Erzeugen eines Druckbildes, welches in einer Frankiermaschine auf einen Träger gedruckt wird**
Method for generating an image, printed on a carrier in a franking machine
Procédé pour générer une image, imprimée sur un support dans une machine d'affranchissement

(43) Veröffentlichungstag der Anmeldung: 12.03.1997
(73) Patentinhaber: Francotyp-Postalia Aktiengesellschaft & Co., 16547 Birkenwerder (DE)
(72) Erfinder: Hansel, Marcus, D-10405 Berlin (DE); Knoth, Norbert, D-12167 Berlin (DE); Rieckhoff, Peter, Dr., D-10555 Berlin (DE)
(74) Vertreter: Schaumburg, Thoenes, Thurn Patentanwälte

(56) Entgegenhaltungen:
- EP-A- 0 261 978
- EP-A- 0 352 498
- EP-A- 0 416 508
- EP-A- 0 576 113
- EP-A- 0 578 042
- US-A- 5 146 546

## Beschreibung

Die Erfindung betrifft ein Verfahren zum Erzeugen eines Druckbildes, welches in einer Frankiermaschine auf einen Träger gedruckt wird, bei dem das Druckbild nach Art einer xy-Matrix aus Bildpunkten zusammengesetzt ist, denen in einem Speicher Bildpunktdaten zugeordnet sind.

In der DE 42 21 270 wird ein Verfahren zur Druckbildänderung für eine Frankiermaschine beschrieben. Bei diesem bekannten Verfahren werden Daten für die konstanten Teile des Druckbildes und Daten für variable Teile des Druckbildes in separaten Speicherbereichen gespeichert, um Speicherplatz zu sparen. Zur Änderung eines Druckbildes werden die Schritte Laden der Druckdaten, Selektieren des konstanten Teils des Druckbildes, Editieren der variablen Druckbilddaten und Zusammensetzen und Anzeigen des Druckbildes ausgeführt.

Bei einer Vielzahl von Wahlmöglichkeiten in bezug auf den Aufbau des Druckbildes aus vorgegebenen Bild- oder Textelementen zeigt sich, daß sowohl der Aufwand für die Schnittstelle zum Editieren eines Druckbildes durch den Kunden bzw. Benutzer der Frankiermaschine als auch für das anschließende Zusammensetzen des Druckbildes zu einer Gesamtdarstellung aus den ausgewählten Bild- oder Textelementen während des Drucks durch einen Mikroprozessor steigt. Störend ist insbesondere, daß der Programmteil für das Erzeugen des jeweiligen Druckbildes entsprechend den Kundenvorgaben immer wieder modifiziert werden muß, wenn neue Wahlmöglichkeiten durch neue Bild- und Textelemente hinzukommen. Die Anpassung der Ablaufschritte für das Erzeugen des Druckbildes erfordert neuen Programmieraufwand verbunden mit neuen Testläufen und Aufwand für die Pflege des Programmes, wie z.B. Dokumentation und Hilfefunktionen. Mit zunehmender Anzahl von variabel zusammensetzbaren Bild- und Textelementen eines Druckbildes wird auch die Zeit für das Erzeugen desselben länger, was sich nachteilig auf die Druckgeschwindigkeit auswirken kann, falls sich das Druckbild von Druck zu Druck ändert.

Der Erfindung liegt die Aufgabe zugrunde, ein Verfahren zum Erzeugen eines Druckbildes, welches in einer Frankiermaschine auf einen Träger gedruckt wird, zu schaffen, das auf unterschiedliche Druckbildinhalte und Anordnungen von Bild- und Textteilen eines Druckbildes angewendet werden kann und dessen Ablaufstruktur bezüglich der Verfahrensschritte bei einer Veränderung der Art oder Anzahl der Bild- und Textelemente nicht modifiziert werden muß.

Gemäß einem ersten Aspekt der Erfindung wird diese Aufgabe durch die im Patentanspruch 1 angegebenen Verfahrensschritte gelöst.

Die Erfindung beruht darauf, daß nicht nur die eigentlichen Bilddaten in Bildpunktdateien im Speicher der Frankiermaschine gespeichert sind und in einem Programm die Anordnung der Bildpunktdaten und deren Verarbeitung beim Erzeugen des Druckbildes vorgegeben ist, sondern daß es zusätzlich eine Steuerdatei gibt, die beim Erzeugen des Druckbildes abgearbeitet wird.

Die Zerlegung des Druckbildes in Teilbilder, wie sie dem Stand der Technik entspricht, wird auch bei dem Verfahren nach der Erfindung beibehalten.-Darüber hinaus werden jedoch Daten, die ein Teilbild definieren, in den jeweiligen Teilbilddateien gespeichert. In diesen Teilbilddateien sind Steuerdaten enthalten, wie die zu einem Teilbild gehörenden Bildpunktdaten beim Erzeugen des Druckbildes zu verarbeiten sind, z.B. die x- und y-Position eines Teilbildes oder dessen Ausrichtung bezüglich des Gesamtbildes. Durch die in der separaten Steuerdatei enthaltenen Teilbilddateien ist bereits die Möglichkeit gegeben, die Struktur des Verfahrens zum Erzeugen des Druckbildes bei einer Vielzahl von verschienenen Druckbildern unverändert zu lassen.

Die Zuordnung zwischen den Bildpunktdateien und den Teilbilddateien erfolgt über einen Verweiscode in den Teilbilddateien, der wiederum auf den Identifikationscode einer oder mehrerer Bildpunktdateien verweist. Der Identifikationscode kennzeichnet die einzelnen Bildpunktdateien nach Art eines Namens eindeutig. Durch die Verweiscodes und die Identifikationscodes ist die Trennung und eindeutige Zuordnung der Steuer- und Bildpunktdaten möglich, die die Anwendung eines Druckverfahrens mit unveränderter Programmstruktur auf eine Vielzahl von Druckbildern ermöglicht.

Eine zweckmäßige Ausgestaltung der Erfindung besteht darin, daß jeder Teilbilddatei ferner ein Teilbildfolgecode zugeordnet ist, der auf die nächste Teilbilddatei in einer Folge von Teilbilddateien verweist, und wobei der letzten Teilbilddatei der Folge von Teilbilddateien als Teilbildfolgecode eine Teilbildendemarke zugeordnet ist, anhand derer festgestellt werden kann, daß keine weitere Teilbilddatei im Speicher gespeichert ist, die zu dieser Folge von Teilbilddateien gehört, daß der Mikroprozessor die Folge von Teilbilddateien sukzessive abarbeitet, und daß der Mikroprozessor das Erzeugen des Druckbildes beim Auffinden der Teilbildendemarke beendet.

Durch das Anordnen der Teilbilddateien in einer Folge ist es bei der Erfindung möglich, nach dem Erstellen der Folge von Teilbilddateien im Speicher der Frankiermaschine eine Vielzahl von Druckbildern zu drucken, ohne die das Verfahren definierende Programmstruktur für ein Steuerprogramm des Mikroprozessors abändern zu müssen. Bei der Weiterbildung des Verfahrens enthält jede Teilbilddatei einen Teilbildfolgecode, der auf ein nächstes Teilbild verweist. Somit ist es möglich, die Folge der Teilbilddateien beim Erzeugen der zugehörigen Teilbilder sukzessive abzuarbeiten. Der Teilbildfolgecode ist zweckmäßigerweise eine Adresse, in=welcher der Beginn einer gegebenenfalls folgenden Teilbilddatei gespeichert ist. Das Ende des Ablaufverfahrens wird anhand der Teilbildendemarke in der letzten Teilbilddatei der Folge von Teilbilddateien festgestellt, denn beim Auftreten der Teilbildendemarke gibt es offensichtlich keine weiteren Teilbilddateien in der Folge von Teilbilddateien.

Gemäß einem weiteren Aspekt der Erfindung wird die oben genannte Aufgabe durch die im Patentanspruch 4 angegebenen Verfahrensschritte gelöst.

Durch die Trennung von Bildpunktdateien und Steuerdateien ist es möglich, die Verfahrensstruktur beizubehalten, falls sich die Bildpunktdaten verändern, da nur erstere von der Änderung betroffen sind. Durch die Anordnung der Bildpunktdateien in einer Folge ist gewährleistet, daß die Struktur des Steuerprogramms zum Zugriff auf die Bildpunktdateien unabhängig von deren Art und Anzahl ist. Der Identifikationscode macht es möglich, bei der Suche eine bestimmte Bildpunktdatei auf einfache Weise zu identifizieren. Durch den Folgecode ist es möglich, die Folge von Bildpunktdateien sukzessive und unabhängig von deren Anzahl und Inhalt mit einem Suchalgorithmus zu durchsuchen. Der Suchalgorithmus ist Bestandteil des Steuerprogramms zum Zugriff auf die Bildpunktdateien. Als Ergebnis der Suche wird eine Bildpunktdatei mit dem vorgegebenen Identifikationscode gefunden oder es wird die Endemarke erreicht. Die Endemarke schließlich ermöglicht es, das Ende der Folge von Bildpunktdateien zu erkennen und die Suche gegebenenfalls mit einer Fehlermeldung abzubrechen.

Eine bevorzugte Ausführungsform der Erfindung besteht darin, daß die Steuerdatei ferner mehrere Bilddateien enthält, daß jede Bilddatei ein Druckbild definierende Druckbilddaten enthält, daß jeder Bilddatei ein Bildidentifikationscode zugeordnet ist, unter dem das zugehörige Druckbild auffindbar ist, daß jeder Bilddatei ferner ein Bildfolgecode zugeordnet ist, der auf die nächste Bilddatei in einer Folge der Bilddateien verweist, daß der letzten Bilddatei der Folge von Bilddateien als Bildfolgecode eine Bildendemarke zugeordnet ist, anhand derer festgestellt werden kann, daß keine weitere Bildpunktdatei im Speicher gespeichert ist, die zu dieser Folge von Bilddateien gehört, daß der Mikroprozessor beim Zugriff auf die Steuerdaten die Folge von Bilddateien nach einem Bildidentifikationscode durchsucht, der einem gemäß einer Vorgabe zu druckenden Druckbild entspricht, und daß der Mikroprozessor beim Auffinden dieses Bildidentifikationscodes die Druckbilddaten der zugehörigen Bilddatei für die Steuerung des Erzeugens des Druckbildes verwendet oder beim Auffinden der Bildendemarke eine Bildfehlermeldung erzeugt.

Das Verfahren nach dieser Ausführungsform kann für das Erzeugen eines Druckbildes angewendet werden, welches unter mehreren vorhandenen Druckbildern ausgewählt worden ist. Die Struktur des Steuerprogramms für den Zugriff auf die Steuerdatei und die Bildpunktdateien ist durch diese Ausführungsform unabhängig von der Anzahl der Bilddateien. Es kann die Struktur des erforderlichen Suchalgorithmus wie oben erläutert unabhängig von der Anzahl der Bilddateien beibehalten werden. Durch den Bildidentifikationscode ist es möglich, die dem zu druckenden Druckbild entsprechende Bilddatei eindeutig zu identifizieren. Mit Hilfe des Bildfolgecodes kann die Folge der Bilddateien sukzessive und unabhängig von deren Art und Inhalt mit demselben Suchalgorithmus durchsucht werden. Die Bildendemarke erlaubt es, festzustellen, wann die letzte Bilddatei erreicht ist. Findet der Suchalgorithmus beim Durchsuchen der Folge von Bilddateien beginnend mit der ersten Bilddatei der Folge von Bilddateien die Bildendemarke, ohne daß eine Bilddatei den vorgegebenen Bildidentifikationscode hat, so wird die Suche abgebrochen und eine Bildfehlermeldung ausgegeben.

Das Verfahren nach der Erfindung läßt sich zweckmäßig so ausgestalten, daß eine Reihenfolge der Bildpunktdateien in der Folge von Bildpunktdateien abhängig von der Häufigkeit des Zugriffs auf die jeweilige Bildpunktdatei festgelegt ist. Das bedeutet, daß Bildpunktdateien, die Bild- oder Textelemente enthalten, die sich beim Betrieb der Frankiermaschine häufig ändern (wie z.B. der Zeichensatz für den Portowert), am Anfang der Folge von Bildpunktdateien abgespeichert sind, und Bild- oder Textelemente, auf die seltener zugegriffen werden muß, zum Ende der Folge hin abgespeichert werden. Durch diese Maßnahme kann die Zugriffszeit beträchtlich verkürzt werden, was gerade bei einer Vielzahl von Bildpunktdateien ein großer Vorteil ist, da sich die Anzahl der durchsuchten Dateien bis zum Sucherfolg verringert.

Insbesondere kann das Verfahren so ausgeführt werden, daß mindestens eine Bildpunktdatei Bildpunktdaten enthält, die ein Element einer maschinenlesbaren Kennzeichnung darstellen. Diese maschinenlesbare Kennzeichnung könnte z.B. ein Strichbarcode-Element sein. In diesen Fällen muß an der Struktur der Verfahrensschritte keine Veränderung vorgenommen werden. Es müssen nur entsprechende Bildpunktdateien in den Datenspeicher der Frankiermaschine geladen werden und entsprechende Teilbilddateien zur Verfügung gestellt werden, die das Druckbild, welches den Strichbarcode enthält, beschreiben.

Eine weitere vorteilhafte Ausgestaltung der Erfindung besteht darin, daß als Bildpunktendemarke, Bildendemarke und Teilbildendemarke ein Adressenzeiger verwendet wird, dessen Wert Null ist. Ein solcher Adressenzeiger wird im folgenden als Nullzeiger bezeichnet. Durch die Verwendung von Nullen als Daten in einer Speicherzelle ist es besonders leicht, festzustellen, ob eine Speicherzelle einen Nullzeiger enthält oder nicht. Beim Erkennen eines Nullzeigers greift das Verfahren nicht auf die Adresse mit dem Wert "Null" zu, sondern interpretiert den Wert des Nullzeigers als Endemarke.

Im folgenden wird die Erfindung anhand eines Beispiels und mit Bezug auf die beiliegenden Zeichnungen näher erläutert. Es zeigen:
- Figur 1: ein in einer Frankiermaschine auf einen Träger zu druckendes Druckbild,
- Figur 2: die Zerlegung dieses Druckbildes in Teilbilder,
- Figur 3: die prinzipielle Verknüpfung der Datenstrukturen im Datenspeicher der Frankiermaschine,
- Figur 4: die einzelnen Datenfelder der verwendeten Datenstrukturen,
- Figur 5: die Verknüpfung der Datenstrukturen für das Druckbild des Ausführungsbeispiels, und die
- Figuren 6a, 6b, 6c: ein Flußdiagramm für das Verfahren zum Erzeugen eines Druckbildes, welches in einer Frankiermaschine auf einen Träger gedruckt wird.

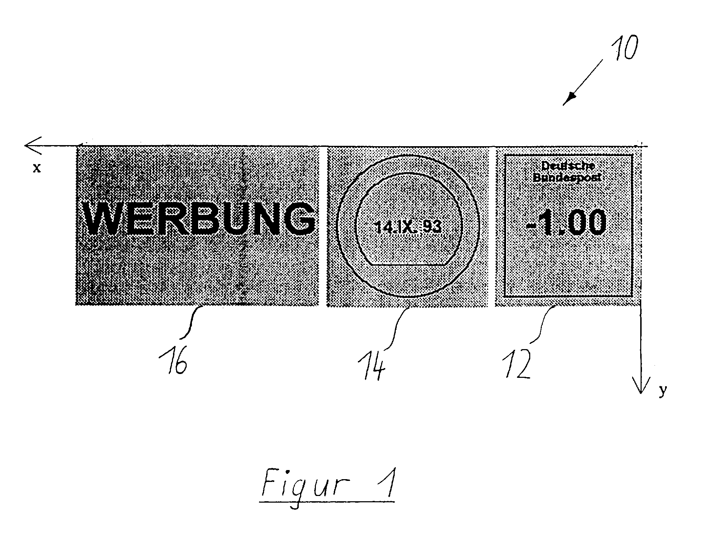

In Figur 1 ist ein Druckbild 10 gezeigt, welches auf einen Träger, z.B. auf Papier eines Kuverts, nach dem Erzeugen des Druckbildes 10 im Datenspeicher der Frankiermaschine unter Verwendung des erfindungsgemäßen Verfahrens gedruckt werden soll. Als Voraussetzung für das Erzeugen müssen Daten, die das Druckbild definieren, im Datenspeicher der Frankiermaschine hinterlegt sein. Zuerst wird deshalb eine mögliche Anordnung der Daten des Druckbildes im Datenspeicher erläutert.

Das Druckbild 10 besteht aus einem Portostempelbild 12, einem Datumstempelbild 14 und einem Werbebild 16. Die rechte obere Ecke des Druckbildes 10 kann als Ursprungspunkt eines xy-Koordinatensystems gewählt werden, der im Schnittpunkt einer mit x bezeichneten horizontalen x-Achse und einer mit y bezeichneten vertikalen y-Achse liegt.

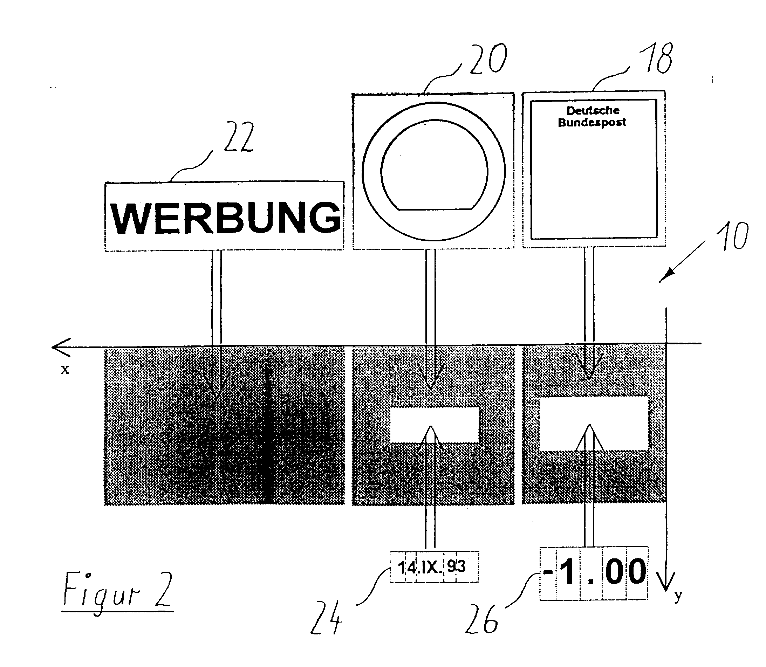

Das Druckbild 10 wird wie in Figur 2 gezeigt in fünf Teilbilder 18 bis 26 zerlegt. Ein Rahmenbild 18 für den Portostempel und ein Rahmenbild 20 für den Datumstempel sind fest vorgegebene Teilbilder. Das Teilbild 22 für die Werbung und das Teilbild 24 für das Datum sind ebenso veränderlich wie der Wert des Portos im Teilbild 26. Das Teilbild 24 für das Datum und das Teilbild 26 für den Portowert sind nochmals in Textelemente unterteilt. So sind im Teilbild 24 für das Datum fünf Textelemente enthalten und im Teilbild 26 für den Portowert ebenfalls fünf Textelemente. Diese Textelemente sind bestimmte Zeichen eines vorgegebenen Zeichensatzes.

Die örtliche Lage der Teilbilder 18 bis 26 läßt sich mit Hilfe der x- und y-Koordinaten bezüglich des xy-Koordinatensystems beschreiben. Als Bezugspunkt dient üblicherweise die rechte obere Ecke der jeweiligen Teilbilder 18 bis 26. Die Größe der Teilbilder 18 bis 26 wird jeweils durch einen Wert für die Ausdehnung in x- und y-Richtung angegeben.

Das Druckbild 10 ist aus Bildpunkten entsprechend dem xy-Koordinatensystem zusammengesetzt. Die den Bildpunkten jeweils zugeordneten Bildpunktdaten werden im Speicher der Frankiermaschine gespeichert. Die für den Zugriff auf diese Daten notwendigen Datenstrukturen sollen im folgenden erläutert werden. Bei Bedarf werden die in den Figuren dargestellten Bezugszeichen durch Kleinbuchstaben ergänzt, um deutlich zu machen, daß es sich um die gleichen Datenstrukturen handelt, die jedoch verschiedene Inhalte haben.

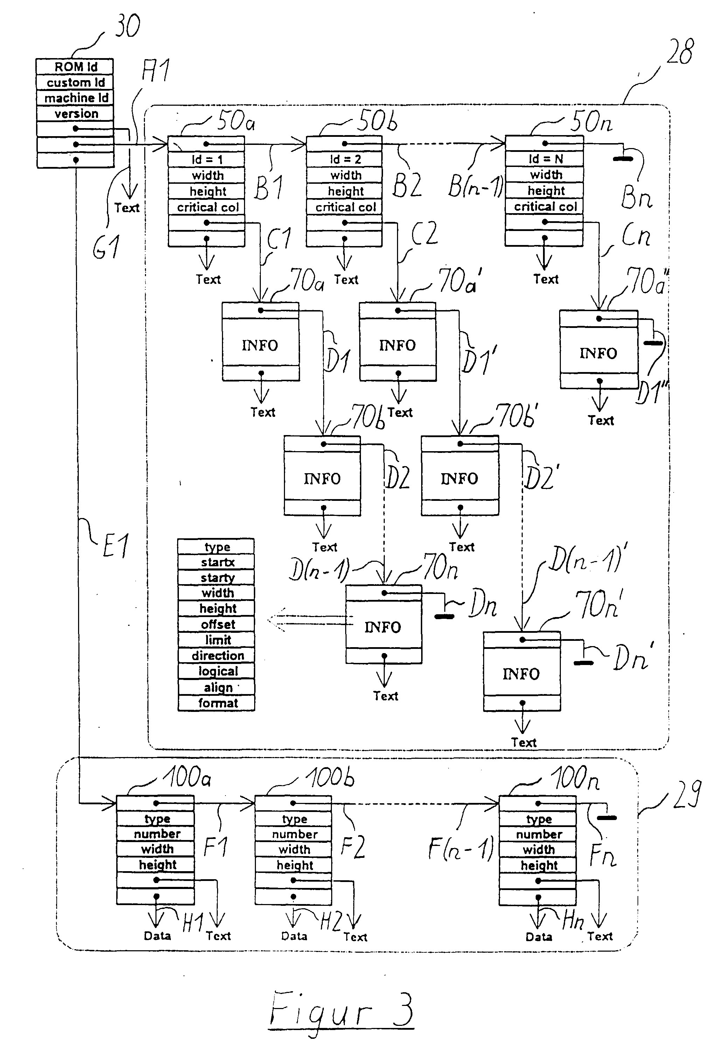

Figur 3 zeigt die prinzipielle Verknüpfung von Datenstrukturen zur Definition von Druckbildern im Speicher der Frankiermaschine. In dieser Figur 3 sind in einer mit Hilfe eines Rahmens symbolisierten Steuerdatei 28 die Daten, welche die Druckbilder definieren und auch das Erzeugen des Druckbildes 10 steuern, zusammengefaßt. In einem weiteren Rahmen 29 in der Figur 3 sind die eigentlichen Bildpunktdaten, welche die Bildinformationen für sogenannte Klischees enthalten, dargestellt.

Ausgehend von einer Wurzeldatei 30, in der Ausgangsdaten für das vom Mikroprozessor abzuarbeitende Programm hinterlegt sind, ist der Zugriff auf eine erste Druckbilddatei 50a mit Hilfe eines Bildstartzeigers, symbolisiert durch den Pfeil A1, möglich. Diese erste Bilddatei 50a beschreibt ein erstes Druckbild und enthält Steuerdaten für das Erzeugen dieses Druckbildes. Von dieser Bilddatei 50a kann mit Hilfe eines ersten Bildzeigers B1 auf eine zweite Bilddatei 50b zur Beschreibung eines zweiten Druckbildes zugegriffen werden. Von der zweiten Bilddatei 50b kann mit Hilfe eines zweiten Bildzeigers B2 sukzessive auf weitere nicht dargestellte Bilddateien für weitere Druckbilder zugegriffen werden, bis man mit Hilfe eines Bildzeigers B(n-1) zu einer letzten Bilddatei 50n für ein letztes Druckbild gelangt. Die Bilddatei 50n enthält als Bildzeiger Bn einen Nullzeiger, der anzeigt, daß keine weitere Bilddatei folgt.

Die Bilddateien 50a, 50b und 50n werden jeweils mit Hilfe eines Bildidentifikationscodes, z.B. Id=1, Id=2,..., Id=N, gekennzeichnet. In jeder Bilddatei 50a, 50b, 50c befindet sich demnach jeweils einer der Bildzeiger B1 bis Bn. Somit ergibt sich eine in Figur 3 gezeigte Folge der Bilddateien 50a, 50b,..., 50n, wobei durch die Punkte ausgedrückt ist, daß die Folge von Bilddateien noch weitere Bilddateien enthalten kann.

In den Bilddateien 50a, 50b und 50n befindet sich jeweils ein Teilbildstartzeiger C1, C2 und Cn. So hat wie Bilddatei 50a den Teilbildstartzeiger C1 für den Zugriff auf die Daten zum Definieren eines ersten, zum ersten Druckbild gehörenden Teilbildes in einer Teilbilddatei 70a. Entsprechend hat die Bilddatei 50b den Teilbildstartzeiger C2 für den Zugriff auf die Daten zum Definieren eines ersten, zum zweiten Druckbild gehörenden Teilbildes in einer Teilbilddatei 70a'. Die Bilddatei 50n hat den Teilbildstartzeiger Cn für den Zugriff auf die Daten zum Definieren eines ersten, zum letzten Druckbild gehörenden Teilbildes in einer Teilbilddatei 70a".

Die Teilbilddatei 70a hat einen Teilbildzeiger D1 auf eine zweite Teilbilddatei 70b, die Daten zur Beschreibung eines zweiten Teilbildes des ersten Druckbildes enthält. Von der zweiten Teilbilddatei 70b kann mit Hilfe eines zweiten Teilbildzeigers D2 sukzessive auf weitere nicht dargestellte Teilbilddateien zugegriffen werden, bis man mit Hilfe eines Teilbildzeigers D(n-1) zu einer letzten Teilbilddatei 70n des ersten Druckbildes gelangt.

Von der ersten Teilbilddatei 70a' des zweiten Druckbildes kann mit Hilfe eines Teilbildzeigers Dl' auf die zweite Teilbilddatei 70b' zur Beschreibung des zweiten Druckbildes zugegriffen werden. Von der zweiten Teilbilddatei 70b' kann mit Hilfe eines zweiten Teilbildzeigers D2' sukzessive auf weitere nicht dargestellte Teilbilddateien zur Beschreibung weiterer Teildruckbilder zugegriffen werden, bis man mit Hilfe eines Teilbildzeigers D(n-1)' zu einer letzten Teilbilddatei 70n' für dieses Druckbild gelangt.

Von der ersten Teilbilddatei 70a" des letzten Druckbildes ist bei diesem Beispiel kein Zugriff auf weitere Teilbilddateien dieses Druckbildes möglich, da es nur aus einem einzigen Teilbild besteht.

Die Teilbilddateien 70n, 70n' und 70n" enthalten als Teilbildzeiger Dn, Dn' und D1" jeweils einen Nullzeiger, der als Teilbildendemarke deutlich macht, daß keine weiteren Teilbilddateien folgen.

Somit ergeben die Teilbilddateien 70a, 70b,..., 70n eine erste Folge von Teilbilddateien. Die Teilbilddateien 70a', 70b',..., 70n' bilden eine zweite Folge von Teilbilddateien. Die Teilbilddatei 70a" kann als besondere Folge von Teilbilddateien betrachtet werden, die nur aus der einzigen Teilbilddatei 70a" besteht.

Die Teilbilddateien 70n, 70n' und 70a" können eine n-te Teilbilddatei der jeweiligen Folge von Teilbilddateien sein, wobei n als Laufvariable eine beliebige natürliche Zahl größer als Null ist. Auf weitere nicht dargestellte Teilbilddateifolgen kann jeweils sukzessive mit Hilfe der oben genannten aber nicht dargestellten Bilddateien zugegriffen werden.

Unter dem Rahmen 29 der Figur 3 zusammengefaßte Bildpunktdateien 100a, 100b,..., 100n enthalten jeweils Bildpunktdaten, die ein Bildelement oder ein Textelement des Druckbildes definieren. Der Zugriff auf die erste Bildpunktdatei 100a ist mit Hilfe eines Bildpunktstartzeigers E1 in der Wurzeldatei 30 möglich. Die erste Bildpunktdatei 100a definiert die Bildpunktdaten eines ersten Bild- oder Textelementes. Von dieser Bildpunktdatei 100a kann mit Hilfe eines ersten Bildpunktzeigers F1 auf die zweite Bildpunktdatei 100b, die ein zweites Bild- oder Textelement definiert, zugegriffen werden. Von der zweiten Bildpunktdatei 100b kann mit Hilfe eines zweiten Bildpunktzeigers F2 sukzessive auf weitere nicht dargestellte Bildpunktdateien zugegriffen werden, bis man mit Hilfe eines Bildpunktzeigers F(n-1) zur letzten Bildpunktdatei 100c gelangt, die ein letztes Bild- oder Textelement definiert. Die Bildpunktdatei 100c enthält als Bildpunktzeiger Fn einen Nullzeiger, der als Endemarke deutlich macht, daß keine weitere Bildpunktdatei folgt.

In jeder Bildpunktdatei 100a, 100b, 100n befindet sich demzufolge ein Bildpunktzeiger F1, F2, Fn. Somit ergibt sich die in Figur 3 gezeigte Folge von Bildpunktdateien 100a, 100b,..., 100n. Durch die Punkte soll ausgedrückt werden, daß die Bildpunktdatei 100n eine n-te Bildpunktdatei sein kann, wobei n als Laufvariable eine beliebige natürliche Zahl größer als Null ist.

Die Bildpunktdateien 100a, 100b,..., 100n werden jeweils mit Hilfe eines Identifikationscodes, z.B. "type" und "number", gekennzeichnet, der den gezielten Zugriff auf eine bestimmte Bildpunktdatei erlaubt.

Die Bildpunktdateien 100a, 100b,..., 100n enthalten jeweils einen Datenzeiger H1, H2,..., Hn, der den Zugriff auf die jeweiligen Bildpunktdaten gestattet.

Die Wurzeldatei 30 enthält weiterhin einen Textzeiger G1, der auf einen Text verweist, der beschreibt, welche Art von Daten in der Wurzeldatei 30 enthalten sind. Alle Bilddateien und Teilbilddateien innerhalb des Rahmens 28 in Figur 3 und alle Bildpunktdateien innerhalb des Rahmens 29 in Figur 3 enthalten ebenfalls jeweils einen solchen Textzeiger für einen Text zur Beschreibung der jeweiligen Daten. Dieser Text kann z.B. für die Auswahl der Teilbilder durch den Kunden bzw. Benutzer der Frankiermaschine oder für den Menüaufbau beim Editieren eines Druckbildes in einer Benutzerschnittstelle verwendet werden. Durch eine Anordnung der Texte in einem separaten Speicherbereich des Datenspeichers der Frankiermaschine kann z.B. eine Anpassung an verschiedene Sprachen leicht dadurch erreicht werden, daß die Texte in diesem Speicherbereich ausgetauscht werden.

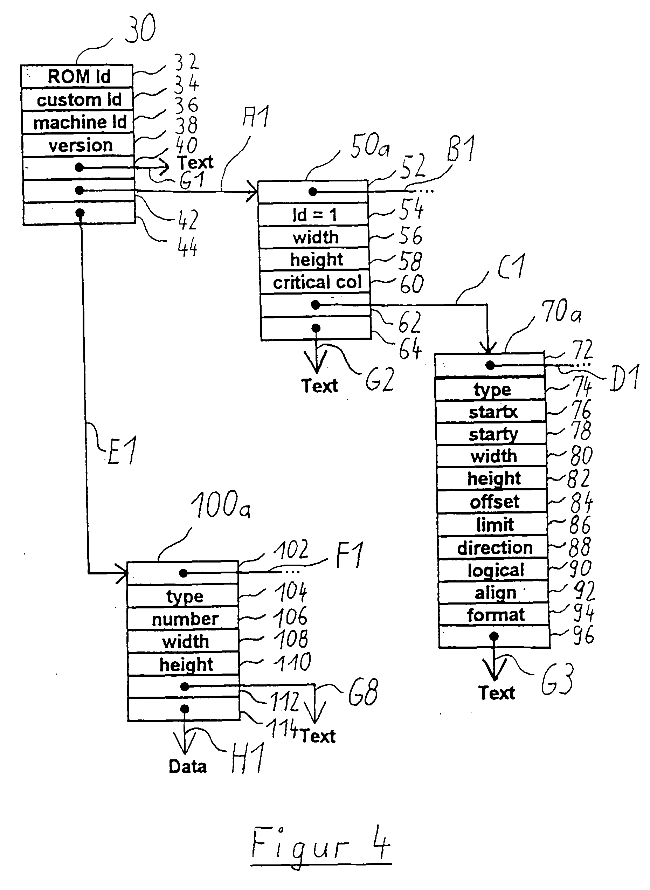

Anhand der Figur 4 werden die einzelnen Felder der Datenstrukturen aus Figur 3 erläutert. Die Wurzeldatei 30, die den Ausgangspunkt für den Datenzugriff während des Verfahrens bildet, enthält ein Feld 32 für einen Speicheridentifikationscode, der das Speichermedium identifiziert, auf dem alle im Verfahren benötigten Daten gespeichert sind; weiterhin ein Feld 34 für eine Kundennummer, welche den das Verfahren anwendenden Kunden identifiziert; ein Feld 36 für eine Maschinennummer, die die konkrete Frankiermaschine bezeichnet, mit der gedruckt wird; und ein Feld 38 für eine Versionsnummer, welche die in einem Steuerprogramm niedergelegte Version des Verfahrens zum Steuern des Drucks angibt. Weiterhin existiert ein Feld 40 für den Textzeiger G1 zum Zuordnen eines Beschreibungstextes zur Wurzeldatei; ein Feld 42 für den Bilddateistartzeiger A1, der auf die erste, ein Druckbild beschreibende Bilddatei 50a verweist; sowie ein Feld 44 für den Bildpunktstartzeiger E1, der auf die erste Bildpunktdatei 100a verweist, welche die Bildpunktdaten des ersten Bild- oder Textelementes enthält.

Die Bilddatei 50a hat ein Feld 54 für den Bilddateizeiger B1, der auf eine nächste nicht dargestellte Bilddatei zeigt; ein Feld 54 für einen Bildidentifikationscode zum Auffinden des einer Vorgabe entsprechenden Druckbildes; ein Feld 56 für das Abspeichern der Breite des jeweiligen Druckbildes; ein Feld 58 für die Höhe des Druckbildes sowie ein Feld 60 zur Speicherung der kritischen Spalte, die posttechnisch von besonderer Bedeutung ist. Weiterhin enthält diese Bilddatei 50a ein Feld 62 für den Teilbildstartzeiger C1, der auf die erste Teilbilddatei 70a zeigt, die das erste Teilbild des Druckbildes beschreibt, und ein Feld 64 für einen Textzeiger G2, der auf einen Text zur Beschreibung der jeweiligen Bilddatei verweist.

Die Teilbilddatei 70a hat ein Feld 72 zur Speicherung des Teilbildzeigers D1 für den Zugriff auf eine nächste nicht dargestellte Teilbilddatei. Weiterhin enthält sie ein Feld 74, in dem auf den Typ bzw. die Gruppenzugehörigkeit eines oder mehrerer zum jeweiligen Teilbild gehörenden Bild- oder Textelementes durch einen Gruppenverweiscode verwiesen wird; sowie Felder 76 und 78 für die Lage des Teilbildes im Gesamtdruckbild in x-Richtung bzw. in y-Richtung sowie Felder 80 und 82 für die Ausdehnung des jeweiligen Teilbildes in x-Richtung bzw. y-Richtung. Weitere Felder dieser Datenstruktur sind ein Feld 84 für einen Auswahlcode, der zum Festlegen der zugehörigen Bild- oder Textelemente des jeweiligen Teilbildes in unten beschriebener Weise verwendet wird; ein Feld 86 für die maximale Anzahl von Textelementen in einem Teilbild; ein Feld 88 zur Speicherung einer Schreibrichtung, die angibt, wie die Textelemente innerhalb des Teilbildes angeordnet werden sollen, z.B. horizontal oder vertikal; ein Feld 90 zur Kennzeichnung der logischen Verknüpfung für den Fall, daß sich zwei Teilbilder des Druckbildes überlappen, z.B. Verknüpfungen gemäß einer UND-, ODER- oder XOR-Funktion; ein Feld 92 zur Festlegung der Ausrichtung der Textelemente, z.B. linksbündig, rechtsbündig oder zentriert; ein Feld 94 für das Format des Datums und ein Feld 96 für einen Textzeiger G3, der auf einen Text zur Beschreibung der jeweiligen Teilbilddatei verweist.

Die Bildpunktdatei 100a enthält ein Feld 102 für den Bildpunktzeiger F1, der auf eine nächste nicht dargestellte Bildpunktdatei zeigt; ein Feld 104 für einen den Typ bzw. eine Gruppe, zu der die Bildpunktdaten der Bildpunktdatei gehören, anzeigenden Gruppenidentifikationscode; ein Feld 106 zur Speicherung eines Elementidentifikationscodes, unter dem eine spezielle Bildpunktdatei einer der Gruppen auffindbar ist; ein Feld 108 für die Breite und ein Feld 110 für die Höhe des durch die Bildpunktdaten definierten Bild- oder Textelementes; ein Feld 112 für einen Textzeiger G8, der auf einen Text zur Beschreibung der jeweiligen Bildpunktdaten verweist, und ein Feld 114 zur Speicherung des Datenzeigers H1 für den Zugriff auf die Bildpunktdaten.

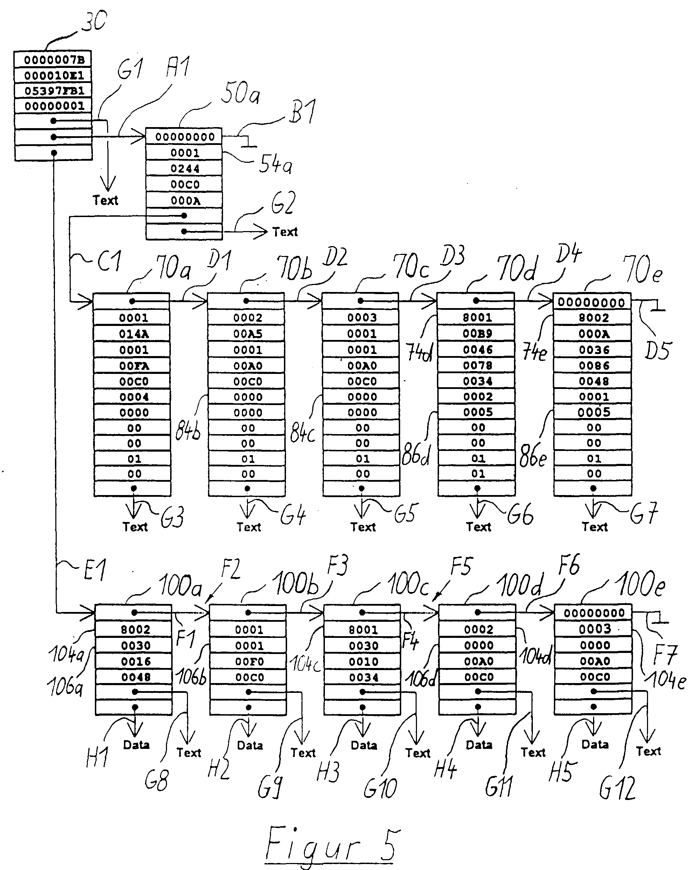

Figur 5 zeigt die Verknüpfung der Datenstruktur im Speicher der Frankiermaschine für das in Figur 1 und 2 gezeigte Druckbild 10. Diese Verknüpfung der Datenstrukturen bildet die Grundlage für das erfindungsgemäße Verfahren, das im Anschluß an die Beschreibung der Figur 5 erläutert wird. Die einzelnen Felder der in Figur 5 gezeigten Datenstrukturen sind mit konkreten Werten für das darzustellende Druckbild belegt. Diese Werte sind in hexadezimaler Schreibweise dargestellt und geben die für die Darstellung des Stempelbildes notwendigen Werte wieder. Die generelle Bedeutung der Felder der gezeigten Datenstrukturen wurde bereits in Figur 4 erläutert. Exemplarisch wird im folgenden auf Felder mit besonderer Bedeutung hingewiesen.

Die Wurzeldatei 30 in Figur 5 enthält den Bilddateistartzeiger A1, der auf die erste und im Beispiel gleichzeitig letzte Bilddatei 50a verweist, sowie den Bildpunktstartzeiger E1, der auf die erste Bildpunktdatei 100a zeigt.

Beim Beispiel nach Figur 5 ist nur eine einzige Bilddatei 50a vorhanden, da nur das Stempelbild 10 bei diesem Beispiel gedruckt werden soll. Demzufolge ist der Bildzeiger B1 in der Bilddatei 50a die Bildendemarke, die durch Nullen als Nullzeiger gekennzeichnet ist und anhand derer das Steuerverfahren erkennt, daß keine weiteren Bilddateien folgen.

In der Bilddatei 50a befindet sich der Teilbildstartzeiger C1 für den Zugriff auf die erste Teilbilddatei 70a für das Darstellen des Teilbildes 22 für die Werbung.

Der Teilbildzeiger D1 der Teilbilddatei 70d dient dem Zugriff auf die zweite Teilbilddatei 70b für das Darstellen des Rahmenbildes 20 für das Datum. Der Teilbildzeiger D2 dieser zweiten Teilbilddatei 70b dient dem Zugriff auf eine dritte Teilbilddatei 70c für das Darstellen des Rahmenbildes 18 für das Porto. Ein Teilbildzeiger D3 dieser Teilbilddatei 70c dient dem Zugriff auf eine vierte Teilbilddatei 70d für das Darstellen des Teilbildes 24 für das jeweilige Datum. Ein Teilbildzeiger D4 dieser Datei weist auf eine fünfte Teilbilddatei 70e für das Darstellen des Teilbildes 26 für den Portowert. Die Teilbilddatei 70e hat als Teilbildzeiger D5 einen Nullzeiger, der durch acht Nullen erkennbar ist. Dieser Nullzeiger ist die Teilbildendemarke, die anzeigt, daß es keine weiteren Teilbilddateien in der Folge von Teilbilddateien 70a bis 70e gibt.

Der Gruppenverweiscode in den Feldern 74d bzw. 74e der Teilbilddateien 70d und 70e weist eine Besonderheit auf. Das Setzen des ersten Bits im Gruppenverweiscode macht deutlich, daß es sich bei den zugehörigen Bildpunktdaten um Zeichensatzdaten handelt.

Bei Teilbildern, in denen Text durch Zeichen eines Zeichensatzes dargestellt wird, ist zur Vermeidung und Erkennung von Fehlern während des Verfahrens die Anzahl der Zeichen, die das Teilbild enthält, in einem Datenfeld der Teilbilddatei angegeben. So haben die Teilbilddateien 70d und 70e jeweils den Wert 5 in einem Feld 86d bzw. 86e, der die Anzahl der Zeichen für die Darstellung des Teilbildes 24 für das Datum bzw. des Teilbildes 26 für den Portowert angibt.

Besonders soll auch auf die Felder 84b und 84c für den Auswahlcode in den Teilbilddateien 70b bzw. 70c hingewiesen werden. Diese Felder haben jeweils den Wert Null. Damit wird angezeigt, daß das Rahmenbild 18 für den Portostempel und das Rahmenbild 20 für den Datumstempel keine Varianten haben, da sie durch die Post vorgegeben sind.

Die erste Bildpunktdatei 100a definiert die Bildpunktdaten eines ersten Zeichens des Zeichensatzes für den Portowert. Dieser Zeichensatz enthält neben den Ziffern 0 bis 9 noch einige Sonderzeichen. Die Bildpunktdatei 100a hat als Gruppenidentifikationscode in einem Feld 104a den hexadezimalen Wert "8002", der in Übereinstimmung mit dem oben Gesagten die Gruppe als Zeichensatz identifiziert. Der Elementeidentifikationscode in einem Feld 106a hat den hexadezimalen Wert "30", dem die Ziffer Null des Zeichensatzes zugeordnet wurde.

Mit Hilfe des Datenzeigers H1 kann die Steuerung auf die eigentlichen Bildpunktdaten für die Ziffer Null des Portowertzeichensatzes zugreifen. Mit Hilfe eines Bildpunktzeigers F1 kann auf weitere nicht dargestellte Bildpunktdateien zugegriffen werden, die weitere Zeichen des Portowertzeichensatzes definieren. In der letzten (nicht dargestellten) Bildpunktdatei des Portowertzeichensatzes befindet sich ein Bildpunktzeiger F2, mit dessen Hilfe auf eine Bildpunktdatei 100b zugegriffen werden kann, die Bildpunktdaten für das Teilbild 22 für die Werbung definiert.

Der Elementeidentifikationscode in einem Feld 106b der Bildpunktdatei 100b hat den Wert "0001" und kennzeichnet dadurch das erste von mehreren Werbebildern. Ein Bildpunktzeiger F3 in der Bildpunktdatei 100b dient dem Zugriff auf eine weitere Bildpunktdatei 100c.

Die Gruppenidentifikationsnummer im Feld 104c beträgt in hexadezimaler Schreibweise "8001". Somit wird wiederum ein Zeichen eines Zeichensatzes durch diese Bildpunktdatei 100c beschrieben. Die Gruppenidentifikationsnummer im Feld 104c in dieser Datei stimmt mit dem Gruppenverweiscode im Feld 74d in der Teilbilddatei 70d überein. Da die Teilbilddatei 70d Daten für das Teilbild 24 für das konkrete Datum bereitstellt, verweist die Bildpunktdatei 100c auf ein Zeichen des Zeichensatzes für die Darstellung des Datums. Ein Bildpunktzeiger F4 der Bildpunktdatei 100c dient dem Zugriff auf weitere nicht dargestellte Bildpunktdateien, in denen die weiteren Zeichen dieses Zeichensatzes definiert sind. Die letzte der nicht dargestellten Bildpunktdateien für die Zeichen des Zeichensatzes für das Datum hat einen Bildpunktzeiger F5 zum Zugriff auf eine Bildpunktdatei 100d. Diese Bildpunktdatei 100d hat den Gruppenidentifikationscode "0002" in einem Feld 104d und definiert die Bildpunktdaten für das Rahmenbild 20 für das Datum. Der Elementidentifikationscode in einem Feld 106d hat den Standardwert Null, da es nur eine Variante des Rahmens im konkreten Beispiel gibt.

Ein Bildpunktzeiger F6 der Bildpunktdatei 100d dient dem Zugriff auf eine letzte Bildpunktdatei 100e. Diese Bildpunktdatei 100e hat den Gruppenidentifikationscode "0003" in einem zweiten Feld 104e und beschreibt das Rahmenbild 18 für den Portowert. Ein Bildpunktzeiger F7 dieser Bildpunktdatei hat den Wert Null und weist als Bildpunktendemarke darauf hin, daß keine weiteren Bildpunktdateien mehr im Speicher vorhanden sind.

Die Bildpunktdateien 100a, 100b, 100c, 100d, 100e sowie die weiteren, in Figur 5 nicht dargestellten Bildpunktdateien enthalten jeweils einen Zeiger H1, H2, H3, H4, H5 sowie für die nicht dargestellten Bildpunktdateien weitere Zeiger. Diese Zeiger ermöglichen den Zugriff auf die jeweiligen Bildpunktdaten.

Alle Datenstrukturen in der Figur 5 enthalten jeweils einen Textzeiger G1 bis G12, der den Zugriff auf einen Text erlaubt, welcher den Inhalt der jeweiligen Datenstruktur beschreibt. Dieser Text kann für eine flexible Benutzerschnittstelle zur Bedienerführung verwendet werden.

Das erfindungsgemäße Verfahren zum Erzeugen eines Druckbildes, welches in einer Frankiermaschine auf einen Träger gedruckt wird, umfaßt als wesentliche Schritte erstens die Auswahl einer Bilddatei entsprechend einer Vorgabe; zweitens die sukzessive Abarbeitung der Teilbilddateien, die die Teilbilder des zu druckenden Druckbildes beschreiben; drittens erfolgt für jede Teilbilddatei der Zugriff auf die zugehörigen Bildpunktdaten und deren Zusammenstellung in einem Speicherbereich für den Druck.

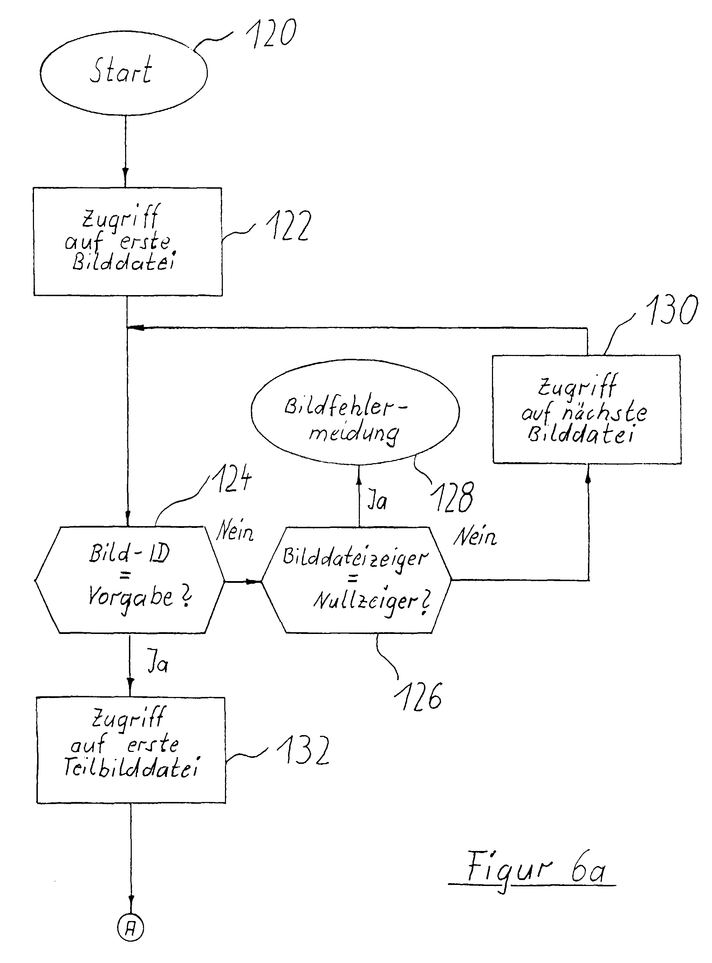

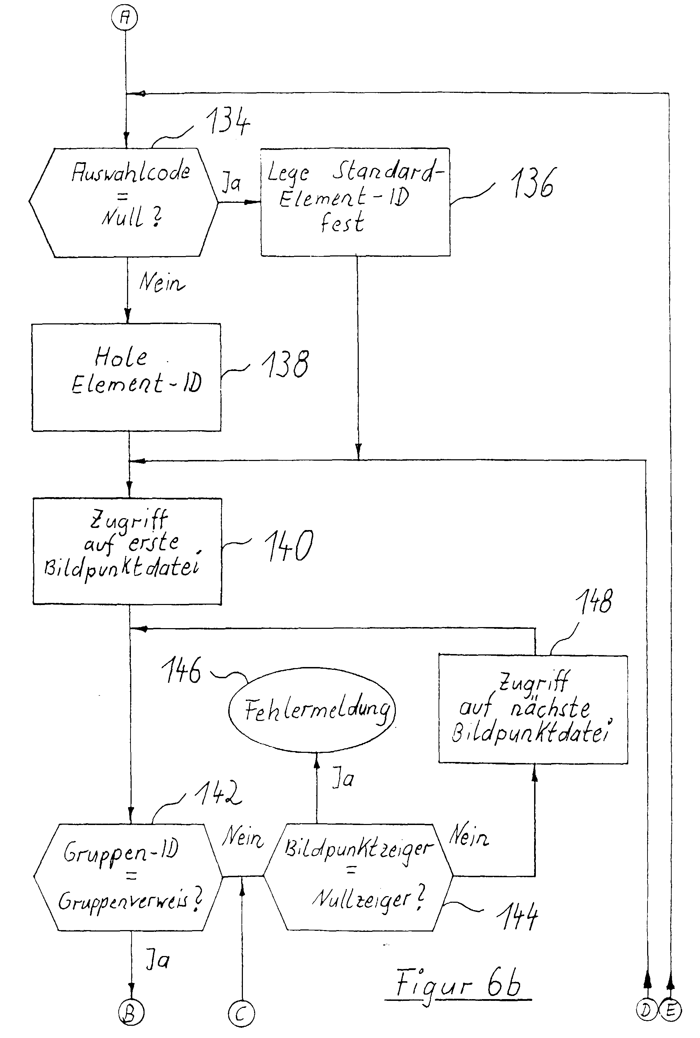

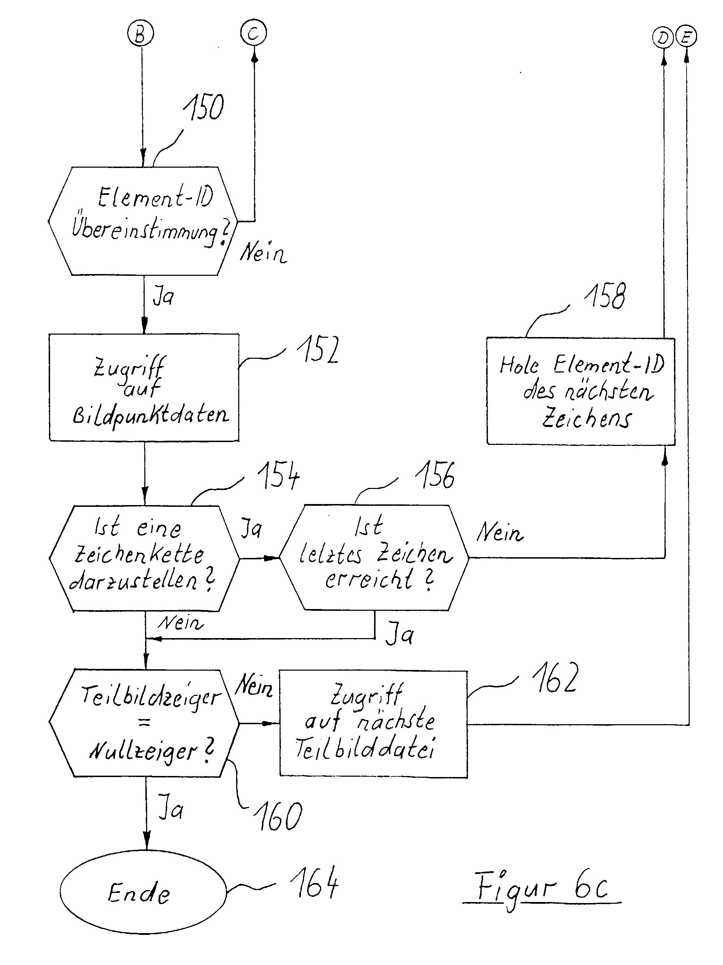

Die Verfahrensschritte gemäß einem Ausführungsbeispiel der Erfindung werden anhand der Figuren 6a, 6b und 6c im folgenden beschrieben. Zu Beginn des Verfahrens wird davon ausgegangen, daß bereits alle Vorgaben für das zu druckende Druckbild bekannt sind (Schritt 120). Diese Vorgaben sind im Arbeitsspeicher der Frankiermaschine gespeichert.

Der erste wesentliche Verfahrensschritt besteht in der Auswahl der Bilddatei entsprechend der Vorgabe für das zu drukkende Druckbild. Dazu werden die Bilddateien nacheinander durchsucht, bis die Bilddatei gefunden wird, deren Bildidentifikationsnummer mit der Vorgabe für das zu druckende Druckbild übereinstimmt.

Ausgehend von der Wurzeldatei 30 erfolgt der Zugriff auf die erste Bilddatei (Schritt 122) mit Hilfe des Bildstartzeigers in der Wurzeldatei. Vor dem Zugriff auf die erste Bilddatei muß festgestellt werden, ob der Bildstartzeiger ein Nullzeiger ist oder nicht. Ist der Bildstartzeiger ein Nullzeiger, so muß das Verfahren mit einer Fehlermeldung abgebrochen werden. Die vorgenannten Schritte bezüglich der Identität des Bildstartzeigers mit einem Nullzeiger sind in Figur 6a nicht dargestellt.

Im Schritt 124, der Teil einer Bilddatei-Suchschleife mit den Verfahrensschritten 124 bis 130 ist, wird überprüft, ob der Bildidentifikationscode der jeweiligen Bilddatei mit der Vorgabe für das zu druckende Druckbild übereinstimmt. Wird keine Übereinstimmung festgestellt, so wird geprüft, ob der Bilddateizeiger der jeweiligen Bilddatei ein Nullzeiger ist (Schritt 126). wenn dies zutrifft, so wird das Verfahren mit einer Bildfehlermeldung abgebrochen (Schritt 128). Im anderen Fall, wenn der Bildzeiger auf eine weitere Bilddatei zeigt, wird auf diese nächste Bilddatei zugegriffen (Schritt 130).

Anschließend wird der Verfahrensschritt 124 wiederholt, womit die Suchschleife (Schritte 124 bis 130) geschlossen ist.

Die Bilddatei-Suchschleife (Schritte 124 bis 130) kann nur mit einer Fehlermeldung (Schritt 128) oder mit einem Sucherfolg (Schritt 124) verlassen werden. Entspricht der Bildidentifikationscode der jeweiligen Bilddatei der Vorgabe (Schritt 124), so wird das Verfahren mit dem Zugriff auf die erste Teilbilddatei, die das erste Teilbild des zu druckenden Druckbildes beschreibt, fortgesetzt (Schritt 132). Aus Übersichtsgründen sind wiederum eine vorherige Abfrage bezüglich eines Nullzeigers und die eventuelle Fehlermeldung nicht in Figur 6a dargestellt.

Als zweiter wesentlicher Verfahrensschritt schließt sich die sukzessive Abarbeitung der Teilbilddateien einer Teilbild-Abarbeitungsschleife mit den Verfahrensschritten 134 bis 162 an. Es wird festgestellt, ob dem jeweiligen Teilbild eindeutig eine Bildpunktdatei zugeordnet werden kann (Schritt 134). Das ist der Fall, wenn der Auswahlcode in der jeweiligen Teilbilddatei den Wert Null hat. In diesem Fall wird ein standardmäßiger Elementidentifikationscode festgelegt (Schritt 136). Die zu dem jeweiligen Teilbild gehörende Bildpunktdatei kann in diesem Fall anhand des Gruppenidentifikationscodes in der entsprechenden Bildpunktdatei identifiziert werden, da nur eine Bildpunktdatei zu dieser Gruppe gehört.

Hat der Auswahlcode der jeweiligen Teilbilddatei einen Wert, der ungleich Null ist (Schritt 134), so wird ein Elementidentifikationscode festgelegt (Schritt 138). Die Festlegung dieses Elementidentifikationscodes erfolgt in Abhängigkeit vom Wert des Auswahlcodes auf unterschiedliche Weise. Besteht das durch die jeweilige Teilbilddatei beschriebene Teilbild nur aus den Bildpunktdaten einer einzigen Bildpunktdatei, so wird deren Elementidentifikationscode festgelegt. Besteht hingegen das Teilbild aus den Bildpunktdaten mehrerer Bildpunktdateien, wie es z.B. beim Datum oder Portowert der Fall ist, so wird im Verfahrensschritt 138 der Elementidentifikationscode des jeweiligen Zeichens einer Zeichenkette für das Datum bzw. den Portowert festgelegt.

Nach dem Festlegen des Elementidentifikationscodes (Schritt 136 bzw. 138) wird das Verfahren in einer Zeichenketten-Abarbeitungsschleife (Schritte 140 bis 162) fortgesetzt. Es wird auf die erste Bildpunktdatei mit Hilfe eines Bildpunktstartzeigers zugegriffen (Schritt 140). Vor dem Zugriff ist festzustellen, ob dieser Bildpunktstartzeiger kein Nullzeiger ist. Dieser Schritt ist in Figur 6b aus Übersichtsgründen nicht dargestellt. Handelt es sich um den Nullzeiger, so ist das Verfahren in einem ebenfalls nicht dargestellten Schritt abzubrechen.

Ein weiterer wesentlicher Verfahrensschritt besteht darin, daß in einer Bildpunktdatei-Suchschleife (Schritte 142 bis 150) die Bildpunktdatei gesucht wird, deren Gruppenidentifikationscode und Elementidentifikationscode mit dem Gruppenverweiscode der jeweiligen Teilbilddatei bzw. dem jeweils festgelegten Elementidentifikationscode übereinstimmt. Dazu wird überprüft, ob der Gruppenidentifikationscode der jeweiligen Bildpunktdatei mit dem Gruppenverweiscode der Teilbilddatei übereinstimmt (Schritt 142). Ist dies nicht der Fall, so wird festgestellt, ob der Bildpunktzeiger der jeweiligen Bildpunktdatei ein Nullzeiger ist (Schritt 144). Ist dies der Fall, so wird das Verfahren mit einer Fehlermeldung abgebrochen (Schritt 146). Ist der Bildpunktzeiger vom Nullzeiger verschieden, so wird mit Hilfe des Bildzeigers auf die nächste Bildpunktdatei zugegriffen (Schritt 148) und das Verfahren mit dem Schritt 142 fortgesetzt. Somit ist die Bildpunktdatei-Suchschleife (Schritte 142 bis 150) geschlossen. Wird festgestellt, daß die Gruppenidentifikationsnummer der jeweiligen Bilddatei die gesuchte ist (Schritt 142), so wird geprüft, ob der Elementidentifikationscode der jeweiligen Bildpunktdatei ebenfalls dem gesuchten Elementidentifikationscode entspricht (Schritt 150). Ist dies nicht der Fall, so wird das Verfahren innerhalb der Bildpunktdatei-Suchschleife (Schritte 142 bis 150) mit dem Schritt 144 fortgesetzt. Stimmt jedoch auch die Elementidentifikationsnummer (Schritt 150) überein, so wird die Schleife verlassen.

Die Bildpunktdatei-Suchschleife (Schritte 142 bis 150) kann somit nur im Schritt 144 mit einer darauf folgenden Fehlermeldung (Schritt 146) oder mit positivem Suchergebnis verlassen werden (Schritt 150). Um die Suche der Bildpunktdateien zu beschleunigen, werden sie zweckmäßigerweise so angeordnet, daß ihre Reihenfolge in der Folge von Bildpunktdateien abhängig von der Häufigkeit des Zugriffs auf die jeweilige Bildpunktdatei festgelegt ist.

Im folgenden Schritt 152 wird mit Hilfe des Datenzeigers in der ermittelten Bildpunktdatei auf die Bildpunktdaten zugegriffen. Die Bildpunktdaten können unter Berücksichtigung der Steuerdaten in der jeweiligen Teilbilddatei entweder in einen Zwischenspeicher der Frankiermaschine kopiert werden, oder sie können direkt für den Druck verwendet werden, indem sie einem Druckwerk zugeführt werden.

Danach wird gefragt, ob eine Zeichenkette darzustellen ist (Schritt 154). Ist dies der Fall, so wird gefragt, ob bereits das letzte Zeichen erreicht ist (Schritt 156). Ist dies nicht der Fall, so wird der Elementidentifikationscode des nächsten Zeichens der Zeichenkette bestimmt (Schritt 158) und das Verfahren im Schritt 140 fortgesetzt. Damit wird eine Zeichenketten-Abarbeitungsschleife (Schritte 140 bis 158) geschlossen, die solange durchlaufen wird, bis alle zugehörigen Zeichen des Teilbildes bearbeitet wurden. Wird festgestellt, daß keine Zeichenkette darzustellen ist (Schritt 154), so wird die Zeichenketten-Abarbeitungsschleife (Schritte 140 bis 158) verlassen. Die Zeichenketten-Abarbeitungsschleife (Schritte 140 bis 158) wird ebenfalls verlassen, wenn festgestellt wird, daß das letzte Zeichen der Zeichenkette erreicht wurde (Schritt 156). In beiden Fällen wird das Verfahren mit einem Schritt 160 fortgesetzt, in dem festgestellt wird, ob der Teilbildzeiger der jeweiligen Teilbilddatei ein Nullzeiger ist. Ist dies der Fall, so wird auf die nächste Teilbilddatei zugegriffen (Schritt 162) und das Verfahren mit dem Schritt 134 fortgesetzt, womit sich die Teilbild-Abarbeitungsschleife (Schritte 134 bis 162) schließt. Wird festgestellt, daß der Teilbildzeiger der jeweiligen Teilbilddatei ein Nullzeiger ist (Schritt 160), so wird die Teilbildabarbeitungsschleife verlassen und das Verfahren beendet (Schritt 164).

Als Resultat beim Ablauf des Verfahrens zum Erzeugen eines Druckbildes, welches in einer Frankiermaschine auf einen Träger gedruckt wird, sind die Bildpunktdaten des zu druckenden Druckbildes (im Ausführungsbeispiel entsprechend Figur 1) im Zwischenspeicher der Frankiermaschine. Dort sind die Bildpunktdaten so angeordnet, daß ein Druckmodul direkt auf sie zugreifen kann.

Das in den Figuren 6a, 6b und 6c gezeigte Flußdiagramm bleibt unverändert für ein breites Spektrum von Druckbildern. Verändert wird lediglich der Vorrat an möglichen Bild- und Textelementen in der Bildpunktdateifolge und der Inhalt der Teilbilddateien in der zum jeweiligen Druckbild gehörenden Teilbilddateifolge.

Soll z.B. in das Druckbild 10 zwischen dem Portostempelbild 12 und dem Datumstempelbild 14 ein sogenannter Numerateur, welcher den jeweiligen Aufdruck des Stempelbildes numeriert, in vertikaler Richtung eingefügt werden, so sind die im folgenden beschriebenen Veränderungen durchzuführen. In die Steuerdatei 28 muß eine neue Teilbilddatei eingefügt bzw. angehängt werden, die das Numerateur-Teilbild z.B. bezüglich seiner Lage im Druckbild 10 definiert. Da es sich bei dem einzufügenden Teilbild für den Numerateur um eine Kette von Ziffern handelt, ist das erste Bit im Gruppenverweiscode der Teilbilddatei zu setzen. Weiterhin ist ein Auswahlcode festzulegen, bei dem anhand einer in der Frankiermaschine vorhandenen Speicherzelle festgestellt wird, das wievielte Druckbild gerade gedruckt wird.

Soll es nicht zu Überlagerungen des Numerateur-Teilbildes mit dem Datumstempelbild 14 kommen, so sind das Rahmenbild 20 für den Datumstempel, das Teilbild 22 für die Werbung und das Teilbild 24 für das Datum zu verschieben, indem die Position in x-Richtung in den Teilbilddateien 70b, 70a bzw. 70d entsprechend verändert wird. Da das Druckbild 10 durch die Verschiebung breiter geworden ist, muß auch der Wert für die Breite des Druckbildes in der Bilddatei 50a korrigiert werden.

Gegebenenfalls müssen auch noch Bildpunktdateien, welche die Bildpunktdaten für die einzelnen Ziffern enthalten, in die Folge der Bildpunktdateien 100a bis 100e eingefügt werden.

## Patentansprüche

1. Verfahren zum Erzeugen eines Druckbildes (10), welches in einer Frankiermaschine auf einen Träger gedruckt wird, bei dem das Druckbild (10) nach Art einer xy-Matrix aus Bildpunkten zusammengesetzt ist, denen in einem Speicher Bildpunktdaten zugeordnet sind, wobei die folgenden Schritte ausgeführt werden:
ein das Erzeugen des Druckbildes steuernder Mikroprozessor greift auf mehrere Bildpunktdateien (100a bis 100e) zu (Schritte 140, 148),
wobei in jeder Bildpunktdatei (100a bis 100e) Bildpunktdaten zusammengefaßt sind, die ein Bildelement oder ein Textelement des Druckbildes (10) definieren, und
wobei jeder Bildpunktdatei (100a bis 100e) ein Identifikationscode zugeordnet ist, unter dem das zugehörige Bildelement oder Textelement auffindbar ist,
der Mikroprozessor greift ferner auf eine Steuerdatei (28) zu (Schritte 132, 162),
wobei die Steuerdatei (28) mehrere Teilbilddateien (70a bis 70e) enthält, die jeweils Teilbilddaten (74 bis 96) enthalten, die ein Teilbild (12 bis 16) des Druckbildes (10) definieren,
der Mikroprozessor arbeitet die Teilbilddateien (70a bis 70e) des zu druckenden Druckbildes (10) ab (Schritte 132 bis 162),
der Mikroprozessor verwendet beim Abarbeiten der Teilbilddateien die Teilbilddaten (74 bis 96) für das Erzeugen des Druckbildes aus den Bildpunktdaten (Data) mindestens einer durch den jeweiligen Verweiscode (74) bezeichneten Bildpunktdatei (100a bis 100e); (z.B. Schritte 134, 142) und
beendet das Erzeugen des Druckbildes 10 nach dem Abarbeiten der Teilbilddateien (70a bis 70e).

2. Verfahren nach Anspruch 1, dadurch gekennzeichnet, daß jede Teilbilddatei (70a bis 70e) einen Verweiscode (74) enthält, der auf mindestens einen der Identifikationscodes einer oder mehrerer der Bildpunktdateien (100a bis 100e) verweist,
jeder Teilbilddatei (70a bis 70e) ferner ein Teilbildfolgecode (72) zugeordnet ist, der auf die nächste Teilbilddatei in einer Folge der Teilbilddateien (70a bis 70e) verweist, und
wobei der letzten Teilbilddatei (70e) der Folge von Teilbilddateien als Teilbildfolgecode (72) eine Teilbildendemarke (D5) zugeordnet ist, anhand derer festgestellt werden kann, daß keine weitere Teilbilddatei im Speicher gespeichert ist, die zu dieser Folge von Teilbilddateien (70a bis 70e) gehört,
daß der Mikroprozessor die Folge von Teilbilddateien (70a bis 70e) sukzessive abarbeitet (Schritte 132 bis 162), und daß der Mikroprozessor das Erzeugen des Druckbildes (10) beim Auffinden der Teilbildendemarke (D5) beendet (Schritte 160, 164).

3. Verfahren nach Anspruch 2, dadurch **gekennzeichnet,** daß jeder Bildpunktdatei (100a bis 100e) ferner ein Bildpunktfolgecode (102) zugeordnet ist, der auf die nächste Bildpunktdatei in einer Folge der Bildpunktdateien (100a bis 100e) verweist,
wobei der letzten Bildpunktdatei (100e) der Folge von Bildpunktdateien (100a bis 100e) als Bildpunktfolgecode (102) eine Bildpunktendemarke zugeordnet ist, anhand derer festgestellt werden kann, daß keine weitere Bildpunktdatei im Speicher gespeichert ist, die zu dieser Folge von Bildpunktdateien (100a bis 100e) gehört,
daß der Mikroprozessor die Folge von Bildpunktdateien (100a bis 100e) nach dem Identifikationscode der durch den Verweiscode (z.B. 74 und 84) bezeichneten Bildpunktdatei durchsucht (Schritte 140 bis 150) und
daß der Mikroprozessor beim Auffinden dieses Identifikationscodes auf die jeweiligen Bildpunktdaten zugreift (Schritt 152) oder beim Auffinden der Bildpunktendemarke eine Fehlermeldung erzeugt (Schritte 142, 146).

4. Verfahren zum Erzeugen eines Druckbildes (10), welches in einer Frankiermaschine auf einen Träger gedruckt wird, bei dem das Druckbild (10) nach Art einer xy-Matrix aus Bildpunkten zusammengesetzt ist, denen in einem Speicher Bildpunktdaten zugeordnet sind, wobei die folgenden Schritte ausgeführt werden:
ein das Erzeugen des Druckbildes steuernder Mikroprozessor greift auf mehrere Bildpunktdateien (100a bis 100e) zu (Schritte 140, 148),
wobei in jeder Bildpunktdatei (100a bis 100e) Bildpunktdaten zusammengefaßt sind, die ein Bildelement oder ein Textelement des Druckbildes (10) definieren,
jeder Bildpunktdatei (100a bis 100e) ein Identifikationscode (104) zugeordnet ist, unter dem das zugehörige Bildelement oder Textelement auffindbar ist,
jeder Bildpunktdatei (100a bis 100e) ferner ein Bildpunktfolgecode (102) zugeordnet ist, der auf die nächste Bildpunktdatei in einer Folge der Bildpunktdateien (100a bis 100e) verweist,
und wobei der letzten Bildpunktdatei (100e) der Folge von Bildpunktdateien (100a bis 100e) als Bildpunktfolgecode (102) eine Bildpunktendemarke (F7) zugeordnet ist, anhand derer festgestellt werden kann, daß keine weitere Bildpunktdatei im Speicher gespeichert ist, die zu dieser Folge von Bildpunktdateien (100a bis 100e) gehört,
der Mikroprozessor greift auf eine Steuerdatei (28) zu (Schritte 132, 162), in der Steuerdaten für das zu drukkende Druckbild (10) enthalten sind,
wobei in der Steuerdatei (28) auf mindestens einen der Identifikationscodes verwiesen wird, dessen Textelement oder Bildelement zu drucken ist,
der Mikroprozessor durchsucht die Folge von Bildpunktdateien (100a bis 100e) nach diesem Identifikationscode (Schritte 140 bis 150) und
der Mikroprozessor verwendet beim Auffinden dieses Identifikationscodes die Bildpunktdaten (Data) der zugehörigen Bildpunktdatei zum Erzeugen des Druckbildes (Schritte 150, 152) oder erzeugt beim Auffinden der Bildpunktendemarke (F7) eine Fehlermeldung (Schritte 144, 146).

5. Verfahren nach Anspruch 4, dadurch **gekennzeichnet,** daß die Steuerdatei ferner mehrere Teilbilddateien (70a bis 70e) enthält,
daß jede Teilbilddatei (70a bis 70e) Teilbilddaten (74 bis 96) enthält, die ein Teilbild des Druckbildes (10) bilden,
daß jede Teilbilddatei (70a bis 70e) einen Verweiscode (74) enthält, der auf mindestens einen der Identifikationscodes einer oder mehrerer der Bildpunktdateien (100a bis 100e) verweist,
daß jeder Teilbilddatei (70a bis 70e) ferner ein Teilbildfolgecode (72) zugeordnet ist, der auf die nächste Teilbilddatei in einer Folge der Teilbilddateien (70a bis 70e) verweist, und
daß der letzten Teilbilddatei (70e) der Folge von Teilbilddateien (70a bis 70e) als Teilbildfolgecode (72) eine Teilbildendemarke (D5) zugeordnet ist, anhand derer festgestellt werden kann, daß keine weitere Teilbilddatei im Speicher gespeichert ist, die zu dieser Folge von Teilbilddateien (70a bis 70e) gehört,
daß der Mikroprozessor beim Zugriff auf die Steuerdatei die Folge von Teilbilddateien des zu druckenden Druckbildes sukzessive abarbeitet (Schritte 132 bis 162),
daß der Mikroprozessor bei der Abarbeitung der Teilbilddateien (70a bis 70e) die Teilbilddaten (74 bis 96) für die Steuerung des Erzeugens des Druckbildes verwendet (z.B. Schritte 134, 142) und
beim Auffinden der Teilbildendemarke (D5) das Erzeugen des Druckbildes (10) beendet (Schritte 160, 164).

6. Verfahren nach einem der Ansprüche 1 bis 5, dadurch **gekennzeichnet,** daß die Steuerdatei ferner mehrere Bilddateien enthält,
daß jede Bilddatei ein Druckbild definierende Druckbilddaten enthält,
daß jeder Bilddatei ein Bildidentifikationscode (54) zugeordnet ist, unter dem das zugehörige Druckbild auffindbar ist,
daß jeder Bilddatei ferner ein Bildfolgecode (52) zugeordnet ist, der auf die nächste Bilddatei in einer Folge der Bilddateien verweist,
daß der letzten Bilddatei der Folge von Bilddateien als Bildfolgecode eine Bildendemarke zugeordnet ist, anhand derer festgestellt werden kann, daß keine weitere Bildpunktdatei im Speicher gespeichert ist, die zu dieser Folge von Bilddateien gehört,
daß der Mikroprozessor beim Zugriff auf die Steuerdaten die Folge von Bilddateien nach einem Bildidentifikationscode durchsucht, der einem gemäß einer Vorgabe zu drukkenden Druckbild entspricht (Schritte 122 bis 130), und
daß der Mikroprozessor beim Auffinden dieses Bildidentifikationscodes die Druckbilddaten der zugehörigen Bilddatei für die Steuerung des Erzeugens des Druckbildes verwendet (Schritte 132 bis 164) oder beim Auffinden der Bildendemarke eine Bildfehlermeldung erzeugt (Schritt 128).

7. Verfahren nach einem der Ansprüche 1 bis 6, dadurch **gekennzeichnet,** daß der Mikroprozessor die Bildpunktdaten des Druckbildes (10) in einen separaten Speicherbereich kopiert und so zusammenstellt, daß sie unmittelbar gedruckt werden können.

8. Verfahren nach einem der Ansprüche 3 bis 7, dadurch **gekennzeichnet,** daß eine Reihenfolge der Bildpunktdateien (100a bis 100e) in der Folge von Bildpunktdateien (100a bis 100e) abhängig von der Häufigkeit des Zugriffs auf die jeweilige Bildpunktdatei festgelegt ist.

9. Verfahren nach einem der Ansprüche 1 bis 8, dadurch **gekennzeichnet,**
daß jeder Bildpunktdatei als Identifikationscode ein Gruppenidentifikationscode (104), unter dem eine Gruppe von Bildpunktdateien auffindbar ist, und ein Elementidentifikationscode (106), unter dem eine spezielle Bildpunktdatei einer der Gruppen auffindbar ist, zugeordnet sind, und
daß jeder Teilbilddatei als Verweiscode ein Gruppenverweiscode (74), der auf die Bildpunktdateien mit dem gleichen Gruppenidentifikationscode verweist, und ein Auswahlcode (84), der ein Steuerprogramm zur Bestimmung eines oder mehrerer Elementidentifikationscodes (106) äuswählt, zugeordnet sind.

10. Verfahren nach Anspruch 9, dadurch **gekennzeichnet,** daß der Auswahlcode (84) einen vorbestimmten Wert enthält, der anzeigt, daß nur eine einzige Bildpunktdatei existiert, auf die der Gruppenverweiscode (74) verweist, daß beim Auftreten dieses Wertes ein Standardelementidentifikationscode für den Elementidentifikationscode gewählt wird(Schritt 136).

11. Verfahren nach einem der Ansprüche 1 bis 10, dadurch **gekennzeichnet,** daß die Steuerdatei und die Bildpunktdateien jeweils in weiteren separaten Speicherbereichen abgespeichert sind.

12. Verfahren nach einem der Ansprüche 1 bis 11, dadurch **gekennzeichnet,** daß zumindest einigen der Bildpunkte der xy-Matrix jeweils mehrere Bildpunktdaten verschiedener Bildpunktdateien zugeordnet sind und
daß der Mikroprozessor mit Hilfe eines in der Steuerdatei enthaltenen Verknüpfungscodes (90) die Verknüpfung der jeweiligen Bildpunktdaten durchführt.

## Claims

1. Method for generating a print image (10) which is printed onto a carrier in a franking machine, in which case the print image (10) in the manner of an xy-matrix is composed of image dots with which image-dot data is associated in a memory, wherein the following steps are carried out:
a microprocessor, which controls the generation of the print image, accesses a plurality of image-dot data files (100a to 100e) (steps 140, 148),
wherein in each image-dot data file (100a to 100e) image-dot data is combined that defines a picture element or a text element of the print image (10), and wherein associated with each image-dot data file (100a to 100e) there is an identification code under which the associated picture element or text element can be located,
furthermore, the microprocessor accesses a control data file (28) (steps 132, 162),
wherein the control data file (28) contains a plurality of partial image data files (70a to 70e), which contain respective partial image data (74 to 96) that defines a partial image (12 to 16) of the print image (10),
the microprocessor processes the partial image data files (70a to 70e) of the print image (10) that is to be printed (steps 132 to 162),
when processing the partial image data files the microprocessor uses the partial image data (74 to 96) for the generation of the print image from the image-dot data (data) of at least one image-dot data file (100a to 100e) designated by the respective reference code (74); (for example, steps 134, 142), and
terminates the generation of the print image 10 after processing the partial image data files (70a to 70e).

2. Method according to claim 1, characterised in that each partial image data file (70a to 70e) contains a reference code (74) which refers to at least one of the identification codes of one or more of the image-dot data files (100a to 100e),
associated with each partial image data file (70a to 70e) there is, furthermore, a partial image sequence code (72) which refers to the next partial image data file in a sequence of the partial image data files (70a to 70e), and
wherein associated with the last partial image data file (70e) of the sequence of partial image data files as a partial image sequence code (72) there is a partial image end mark (D5) with the aid of which it is possible to establish that no further partial image data file that belongs to this sequence of partial image data files (70a to 70e) is stored in the memory, in that the microprocessor processes the sequence of partial image data files (70a to 70e) successively (steps 132 to 162),
and in that the microprocessor terminates the generation of the print image (10) when the partial image end mark (D5) is located (steps 160, 164).

3. Method according to claim 2, characterised in that associated with each image-dot data file (100a to 100e) there is, furthermore, an image-dot sequence code (102) which refers to the next image-dot data file in a sequence of the image-dot data files (100a to 100e), wherein associated with the last image-dot data file (100e) of the sequence of image-dot data files (100a to 100e) as an image-dot sequence code (102) there is an image-dot end mark with the aid of which it is possible to establish that no further image-dot data file that belongs to this sequence of image-dot data files (100a to 100e) is stored in the memory,
in that the microprocessor searches through the sequence of image-dot data files (100a to 100e) for the identification code of the image-dot data file designated by the reference code (for example, 74 and 84) (steps 140 to 150) and
in that the microprocessor upon location of this identification code accesses the respective image-dot data (step 152) or upon location of the image-dot end mark generates an error message (steps 142, 146).

4. Method for generating a print image (10) which is printed onto a carrier in a franking machine, in which case the print image (10) in the manner of an xy-matrix is composed of image dots with which image-dot data is associated in a memory, wherein the following steps are carried out:
a microprocessor, which controls the generation of the print image, accesses a plurality of image-dot data files (100a to 100e) (steps 140, 148),
wherein in each image-dot data file (100a to 100e) image-dot data is combined that defines a picture element or a text element of the print image (10), and associated with each image-dot data file (100a to 100e) there is an identification code (104) under which the associated picture element or text element can be located,
associated with each image-dot data file (100a to 100e) there is, furthermore, an image-dot sequence code (102) which refers to the next image-dot data file in a sequence of the image-dot data files (100a to 100e), and wherein associated with the last image-dot data file (100e) of the sequence of image-dot data files (100a to 100e) as an image-dot sequence code (102) there is an image-dot end mark (F7) with the aid of which it is possible to establish that no further image-dot data file that belongs to this sequence of image-dot data files (100a to 100e) is stored in the memory,
the microprocessor accesses a control data file (28) (steps 132, 162) in which control data for the print image (10) that is to be printed is contained,
wherein in the control data file (28) there is reference to at least one of the identification codes whose text element or picture element is to be printed, the microprocessor searches through the sequence of image-dot data files (100a to 100e) for this identification code (steps 140 to 150), and
the microprocessor upon location of this identification code uses the image-dot data (data) of the associated image-dot data file for the generation of the print image (steps 150, 152) or upon location of the image-dot end mark (F7) generates an error message (steps 144, 146).

5. Method according to claim 4, characterised in that the control data file contains, furthermore, a plurality of partial image data files (70a to 70e),
in that each partial image data file (70a to 70e) contains partial image data (74 to 96) that forms a partial image of the print image (10),
in that each partial image data file (70a to 70e) contains a reference code (74) which refers to at least one of the identification codes of one or more of the image-dot data files (100a to 100e),
in that associated with each partial image data file (70a to 70e) there is, furthermore, a partial image sequence code (72) which refers to the next partial image data file in a sequence of the partial image data files (70a to 70e), and
in that associated with the last partial image data file (70e) of the sequence of partial image data files (70a to 70e) as a partial image sequence code (72) there is a partial image end mark (D5) with the aid of which it is possible to establish that no further partial image data file that belongs to this sequence of partial image data files (70a to 70e) is stored in the memory,
in that when accessing the control data file the microprocessor successively processes the sequence of partial image data files of the print image that is to be printed (steps 132 to 162),
in that the microprocessor when processing the partial image data files (70a to 70e) uses the partial image data (74 to 96) for the control of the generation of the print image (for example, steps 134, 142), and terminates the generation of the print image (10) when the partial image end mark (D5) is located (steps 160, 164).

6. Method according to one of claims 1 to 5,
characterised in that, furthermore, the control data file contains a plurality of image data files,
in that each image data file contains print image data that defines a print image,
in that associated with each image data file there is an image identification code (54) under which the associated print image can be located,
in that, furthermore, associated with each image data file there is an image sequence code (52) which refers to the next image data file in a sequence of the image data files,
in that associated with the last image data file of the sequence of image data files as an image sequence code there is an image end mark with the aid of which it is possible to establish that no further image-dot data file that belongs to this sequence of image data files is stored in the memory,
in that when accessing the control data the microprocessor searches through the sequence of image data files for an image identification code that corresponds to a print image that is to be printed in accordance with a specification (steps 122 to 130), and
in that the microprocessor upon location of this image-identification code uses the print-image data of the associated image data file for the control of the generation of the print image (steps 132 to 164) or upon location of the image end mark generates an image error message (step 128).

7. Method according to one of claims 1 to 6,
characterised in that the microprocessor copies the image-dot data of the print image (10) into a separate memory area and collates the data in such a way that it can be printed directly.

8. Method according to one of claims 3 to 7,
characterised in that a series of image-dot data files (100a to 100e) is established in the sequence of image-dot data files (100a to 100e) as a function of the frequency of access to the respective image-dot data file.

9. Method according to one of claims 1 to 8,
characterised in that associated with each image-dot data file as an identification code there is a group identification code (104), under which it is possible to locate a group of image-dot data files, and an element identification code (106), under which it is possible to locate a specific image-dot data file of one of the groups, and
in that associated with each partial image data file as a reference code there is a group reference code (74), which refers to the image-dot data files with the same group identification code, and a selection code (84), which selects a control program for determining one or more element identification codes (106).

10. Method according to claim 9, characterised in that the selection code (84) contains a predetermined value which indicates that only one single image-dot data file exists to which the group reference code (74) refers, in that when this value occurs a standard element identification code is chosen for the element identification code (step 136).

11. Method according to one of claims 1 to 10, characterised in that the control data file and the image-dot data files are, in each case, stored in further separate memory areas.

12. Method according to one of claims 1 to 11, characterised in that associated with at least some of the image dots of the xy-matrix there is a plurality of respective items of image-dot data of different image-dot data files, and
in that the microprocessor carries out the combination of the respective image-dot data with the aid of a combinational logic code (90) contained in the control data file.

## Revendications

1. Procédé pour générer une image imprimée (10) qui est imprimée sur un support dans une machine à affranchir, selon lequel l'image imprimée (10) est réalisée sous la forme d'une matrice x-y de points d'image, auxquels sont associées des données de points d'image contenues dans une mémoire, le procédé comprenant les étapes suivantes :
un microprocesseur qui commande la génération de l'image imprimée accède à plusieurs fichiers de points d'image (100a à 100e) (étapes 140, 148),
des données de point d'image qui définissent un élément d'image ou un élément de texte de l'image imprimée (10) étant regroupées dans chaque fichier de points d'image (100a à 100e) et
un code d'identification sous lequel l'élément d'image ou l'élément de texte concerné peut être recherché étant associé à chaque fichier de points d'image (100a à 100e),
le microprocesseur accède également à un fichier de commande (28) (étapes 132, 162),
le fichier de commande (28) comprenant plusieurs fichiers d'image partielle (70a à 70e), qui contiennent chacun des données d'image partielle (74 à 96) définissant une image partielle (12 à 16) de l'image imprimée, le microprocesseur traite les fichiers d'image partielle (70a à 70e) de l'image (10) à imprimer (étapes 132 à 162),
le microprocesseur utilise lors du traitement des fichiers d'image partielle les données d'image partielle (74 à 96) pour la génération de l'image imprimée à partir des données de point d'image (données) d'au moins un fichier de point d'image (100a à 100e) désigné par le code d'identification (74) concerné ; (par exemple étapes 134, 142) et
termine la génération de l'image imprimée (10) après le traitement des fichiers d'image partielle (70a à 70e).

2. Procédé selon la revendication 1, caractérisé par le fait que chaque fichier d'image partielle (70a à 70e) contient un code d'appel (74) qui appelle au moins un des codes d'identification d'un ou de plusieurs des fichiers de point d'image (100a à 100e),
qu'à chaque fichier d'image partielle (70a à 70e) est associé en outre un code de suite d'image partielle (72) qui appelle le fichier d'image partielle suivant dans une suite de fichiers d'image partielle (70a à 70e) et,
un repère de fin d'image partielle (D5) étant affecté, en tant que code de suite d'image partielle (72), au dernier fichier d'image partielle (70e) de la suite de fichiers d'image partielle, repère à l'aide duquel on peut constater qu'il n'y a pas d'autre fichier d'image partielle appartenant à la suite de fichiers d'image partielle (70a à 70e) enregistré dans la mémoire,
par le fait que le microprocesseur traite la suite de fichiers d'image partielle (70a à 70e) les uns après les autres (étapes 132 à 162) et par le fait que le microprocesseur termine la génération de l'image imprimée (10) lorsqu'il rencontre le repère de fin d'image partielle (D5) (étapes 160, 164).

3. Procédé selon la revendication 2, caractérisé par le fait qu'à chaque fichier de point d'image (100a à 100e) est associé en outre un code de suite de points d'image (102) qui appelle le fichier de point d'image suivant dans une suite de fichiers de point d'image (100a à 100e),
un repère de fin de point d'image étant associé en tant que code de suite de point d'image (102) au dernier fichier de point d'image (100e) de la suite de fichiers de point d'image (100a à 100e), repère à l'aide duquel on peut constater qu'il n'y a pas d'autre fichier de point d'image enregistré dans la mémoire, appartenant à la suite de fichiers de point d'image (100a à 100e), par le fait que le microprocesseur examine la suite de fichiers de point d'image (100a à 100e) à la recherche du code d'identification du fichier de point d'image désigné par le code d'appel (par exemple 74 et 84) (étapes 140 à 150) et
par le fait que le microprocesseur, accède aux données de point d'image concernées (étape 152) lorsqu'il rencontre ledit code d'identification ou produit un message d'erreur lorsqu'il rencontre le repère de fin de point d'image (étapes 142, 146).

4. Procédé pour générer une image imprimée (10) qui est imprimée sur un support dans une machine à affranchir, selon lequel l'image imprimée (10) est réalisée sous la forme d'une matrice x-y de points d'image, auxquels sont associées des données de points d'image contenues dans une mémoire, le procédé comprenant les étapes suivantes :
un microprocesseur qui commande la génération de l'image imprimée accède à plusieurs fichiers de points d'image (100a à 100e) (étapes 140, 148),
des données de points d'image qui définissent un élément d'image ou un élément de texte de l'image imprimée (10) étant regroupées dans chaque fichier de point d'image et
un code d'identification (104) sous lequel l'élément d'image ou l'élément de texte concerné peut être recherché étant associé à chaque fichier de point d'image (100a à 100e),
à chaque fichier de point d'image (100a à 100e) étant associé en outre un code de suite de point d'image (102) qui appelle le fichier de point d'image suivant dans une suite des fichiers de point d'image (100a à 100e),
un repère de fin de point d'image (F7) étant associé en tant que code de suite de point d'image (102) au dernier fichier de point d'image (100e) de la suite de fichiers de point d'image (100a à 100e), repère à l'aide duquel on peut constater qu'il n'y a pas d'autre fichier de point d'image appartenant à la suite de fichiers de point d'image (100a à 100e) enregistré dans la mémoire,
le microprocesseur accède également à un fichier de commande (28) (étapes 132, 162) qui contient des données de commande pour l'image (10) à imprimer,
le fichier de commande (28) appelant au moins un des codes d'identification, dont l'élément de texte ou l'élément d'image doit être imprimé, le microprocesseur examine la suite de fichiers de point d'image (100a à 100e) à la recherche dudit code d'identification (étapes 140 à 150), et le microprocesseur, lorsqu'il trouve ledit code d'identification, utilise les données de point d'image (données) du fichier de point d'image concerné pour générer l'image imprimée (étapes 150, 152) ou lorsqu'il trouve le repère de fin de point d'image (F7) génère un message d'erreur (étapes 144, 146).

5. Procédé selon la revendication 4, caractérisé par le fait que le fichier de commande contient en outre plusieurs fichiers d'image partielle (70a à 70e),
que chaque fichier d'image partielle (70a à 70e) contient des données d'image partielle (74 à 96) qui forment une image partielle de l'image imprimée (10),
que chaque fichier d'image partielle (70a à 70e) contient un code d'appel (74) qui appelle au moins un des codes d'identification d'un ou de plusieurs des fichiers de point d'image (100a à 100e),
qu'à chaque fichier d'image partielle (70a à 70e) est associé en outre un code de suite d'image partielle (72) qui appelle le fichier d'image partielle suivant dans une suite de fichiers d'image partielle (70a à 70e) et
qu'au dernier fichier d'image partielle (70e) de la suite de fichiers d'image partielle (70a à 70e) est associé un repère de fin d'image partielle (D5) en tant que code de suite d'image partielle (72), à l'aide duquel on constate qu'il n'y a pas d'autre fichier d'image partielle appartenant à cette suite de fichiers d'image partielle (70a à 70e) mémorisé dans la mémoire,
que le microprocesseur lors de l'accès au fichier de commande traite successivement la suite de fichiers d'image partielle (70a à 70e) de l'image à imprimer (étapes 132 à 162),
que le microprocesseur lors du traitement des fichiers d'image partielle (70a à 70e) utilise les données d'image partielle (74 à 96) pour la commande de la génération de l'image imprimée (par exemple étapes 134, 142) et lorsqu'il rencontre le repère de fin d'image partielle (D5) met fin à la génération de l'image imprimée (10) (étapes 160, 164).

6. Procédé selon une des revendications 1 à 5, caractérisé par le fait que le fichier de commande contient en outre plusieurs fichiers d'image ,
que chaque fichier d'image contient des données d'image qui définissent une image imprimée,
qu'à chaque fichier d'image est associé un code d'identification d'image (54) sous lequel l'image imprimée concernée peut être recherché,
qu'à chaque fichier d'image est associé en outre un code de suite d'image (52) qui appelle le fichier d'image suivant dans une suite de fichiers d'image,
qu'un repère de fin d'image est associé au dernier fichier d'image de la suite de fichiers d'image en tant que code d'identification d'image, repère à l'aide duquel on constate qu'il n'y a pas d'autre fichier de point d'image appartenant à cette suite de fichiers d'image mémorisé dans la mémoire, que le microprocesseur lors de l'appel des données de commande examine la suite de fichiers d'image à la recherche d'un code d'identification d'image qui corresponde à une image imprimée conformément à une sélection (étapes 122 à 130) et
que le microprocesseur lorsqu'il trouve ledit code d'identification, utilise les données d'image du fichier d'image concerné pour commander la génération de l'image imprimée (étapes 132 à 164) ou lorsqu'il trouve le repère de fin d'image génère un message d'erreur (étape 128).

7. Procédé selon une des revendications 1 à 6, caractérisé par le fait que le microprocesseur copie les données de point d'image de l'image imprimée (10) dans une zone de mémoire séparée et les groupe de telle sorte qu'elles puissent être imprimées directement.

8. Procédé selon une des revendications 3 à 7, caractérisé par le fait qu'une séquence des fichiers de point d'image (100a à 100e) dans la suite de fichiers de point d'image (100a à 100e) est établie en fonction de la fréquence de l'utilisation du fichier de point d'image concerné.

9. Procédé selon une des revendications 1 à 8, caractérisé par le fait
qu'à chaque fichier de point d'image sont associés un code d'identification de groupe (104) en tant que code d'identification, sous lequel un groupe de fichiers de point d'image concerné peut être recherché, et un code d'identification d'élément (106), sous lequel un fichier de point d'image spécifique du groupe de fichiers de point d'image peut être recherché, et
qu'à chaque fichier d'image partielle sont associés un code d'appel de groupe (74) qui appelle les fichiers de point d'image ayant le même code d'identification de groupe et un code de sélection (84) qui sélectionne un programme de commande pour la détermination d'un ou de plusieurs codes d'identification d'élément (106) concerné.

10. Procédé selon la revendication 9, caractérisé par le fait que le code de sélection (84) contient une valeur prédéterminée, indiquant qu'il existe seulement un fichier de point d'image unique qui est appelé par le code d'appel de groupe (74) et
que lors de l'apparition de cette valeur on sélectionne un code d'identification d'élément standard pour le code d'identification d'élément (étape 136).

11. Procédé selon une des revendications 1 à 10, caractérisé par le fait que le fichier de commande et les fichiers de point d'image sont mémorisés chacun dans des zones de mémoire distinctes.

12. Procédé selon une des revendications 1 à 11, caractérisé par le fait qu'à au moins quelques uns des points d'image de la matrice x-y sont associées plusieurs données de point d'image de plusieurs fichiers de point d'image et que
le microprocesseur réalise la combinaison des données de point d'image concernées à l'aide d'un code de combinaison (90) contenu dans le fichier de commande.
